# EUROPÄISCHE PATENTANMELDUNG

(11) **EP 1 780 923 A1**
(43) Veröffentlichungstag der Anmeldung: **02.05.2007**
(21) Anmeldenummer: 05023447.5
(22) Anmeldetag: 26.10.2005
(51) Int. Cl.: H04L 1/00

(54) **Übertragung von Datentelegrammen**

(71) Anmelder: SIEMENS AKTIENGESELLSCHAFT, 80333 München (DE)
(72) Erfinder: Barthel, Herbert, 91074 Herzogenaurach (DE)

(57) **Zusammenfassung**

Die Erfindung betrifft ein System sowie ein Verfahren zum unquittierten Übertragen von Telegrammen. Das System weist mindestens ein erstes Kommunikationsmittel (1), welches zum Senden von Telegrammen vorgesehen ist, und mindestens ein zweites Kommunikationsmittel (2) auf, welches zum Empfangen von Telegrammen vorgesehen ist, wobei ein Telegramm einen Prüfwert (30) aufweist, welcher aus einem Nutzdatenteil (32, 33, 35) des Telegramms bestimmbar ist. Um die Erkennung von Fehlern bei der Übertragung von Telegrammen zu verbessern, wird vorgeschlagen, dass das erste Kommunikationsmittel (1) Mittel zur Bestimmung einer Sendezeit des Telegramms in Form eines ersten Zeitwerts (33, 35) aufweist, wobei der erste Zeitwert (33, 35) zur Bestimmung des Prüfwerts (30) Bestandteil des Nutzdatenteils (32, 33, 35) ist, wobei der erste Zeitwert (33, 35) in einen niederwertigen Teil (35) und einen höherwertigen Teil (33) aufteilbar ist, wobei nur der niederwertige Teil (35) des ersten Zeitwerts Bestandteil des Nutzdatenteils bei Übertragung des Telegramms ist, wobei das zweite Kommunikationsmittel (2) Mittel zur Bestimmung der Empfangszeit des Telegramms in Form eines zweiten Zeitwerts (53, 55) aufweist und wobei Mittel zur Synchronisierung der Mittel zur Bestimmung der Sendezeit und der Mittel zur Bestimmung der Empfangszeit vorgesehen sind.

## Beschreibung

Die Erfindung betrifft ein System sowie ein Verfahren zum Übertragen von Telegrammen. Das System weist mindestens ein erstes Kommunikationsmittel, welches zum Senden von Telegrammen vorgesehen ist und mindestens ein zweites Kommunikationsmittel, welches zum Empfangen von Telegrammen vorgesehen ist, auf. Dabei weist ein Telegramm einen Prüfwert auf, welcher aus einem Nutzdatenteil des Telegramms bestimmbar ist. Das erste Kommunikationsmittel weist Mittel zur Bestimmung einer Sendezeit des Telegramms in Form eines ersten Zeitwerts auf. Ein Telegramm ist ein Datenpaket, das innerhalb eines Kommunikationsnetzes zwischen Kommunikationsmitteln übertragbar ist.

Die Verwendung eines Prüfwerts dient der Gewährleistung von Datenintegrität bei der Datenübermittlung oder -speicherung. Dabei wird ein Wert, im einfachsten Fall eine Prüfsumme, aus Daten eines Telegramms mit einem geeigneten Verfahren bestimmt, z. B. berechnet. Der sich ergebende Wert wird dann als Prüfwert mit gespeichert bzw. übertragen. Der Empfänger des Telegramms kann aus den Daten ebenfalls einen Prüfwert bestimmen und diesen mit dem mitübertragenen Prüfwert des Senders vergleichen. Sind die beiden Prüfwerte unterschiedlich, liegt ein Fehler, insbesondere ein Übertragungsfehler, vor. Sind die beiden Prüfwerte identisch, ist die Nachricht mit hoher Wahrscheinlichkeit korrekt übertragen worden.

Der Erfindung liegt die Aufgabe zugrunde, die Erkennung von Fehlern bei der Übertragung von Telegrammen zu verbessern.

Diese Aufgabe wird durch ein System zum Übertragen von Telegrammen gelöst, mit mindestens einem ersten Kommunikationsmittel, welches zum Senden von Telegrammen vorgesehen ist, mit mindestens einem zweiten Kommunikationsmittel, welches zum Empfangen von Telegrammen vorgesehen ist, wobei ein Telegramm einen Prüfwert aufweist, welcher aus einem Nutzdatenteil des Telegramms bestimmbar ist, wobei das erste Kommunikationsmittel Mittel zur Bestimmung einer Sendezeit des Telegramms in Form eines ersten Zeitwerts aufweist, wobei der erste Zeitwert zur Bestimmung des Prüfwerts Bestandteil des Nutzdatenteils ist, wobei der erste Zeitwert in einen niederwertigen Teil und einen höherwertigen Teil aufteilbar ist, wobei nur der niederwertige Teil des ersten Zeitwerts Bestandteil des Nutzdatenteils bei Übertragung des Telegramms ist, wobei das zweite Kommunikationsmittel Mittel zur Bestimmung der Empfangszeit des Telegramms in Form eines zweiten Zeitwerts aufweist und wobei Mittel zur Synchronisierung der Mittel zur Bestimmung der Sendezeit und der Mittel zur Bestimmung der Empfangszeit vorgesehen sind.

Diese Aufgabe wird durch ein Verfahren zum Übertragen von Telegrammen zwischen einem ersten und einem zweiten Kommunikationsmittel gelöst, bei welchem Verfahren aus einem Nutzdatenteil eines Telegramms ein Prüfwert bestimmt wird, wobei im ersten Kommunikationsmittel eine Sendezeit des Telegramms in Form eines ersten Zeitwerts bestimmt wird, wobei der erste Zeitwert bei der Bestimmung des Prüfwerts Bestandteil des Nutzdatenteils ist, wobei der erste Zeitwert in einen niederwertigen Teil und einen höherwertigen Teil aufgeteilt wird, wobei nur der niederwertige Teil des ersten Zeitwerts als Bestandteil des Nutzdatenteils des Telegramms übertragen wird, wobei im zweiten Kommunikationsmittel eine Empfangszeit des Telegramms in Form eines zweiten Zeitwerts bestimmt wird und wobei die Bestimmung der Sendezeit und die Bestimmung der Empfangszeit synchronisiert werden.

Der Erfindung liegt die Idee zugrunde, nicht den gesamten Zeitwert im Nutzdatenteil des Telegramms zu übertragen, den Zeitwert jedoch trotzdem bei der Bestimmung des Prüfwerts zu verwenden. Statt des gesamten Zeitwerts wird nur der niederwertige Teil (im Folgenden auch Low-Teil genannt) des Zeitwerts als Bestandteil des Nutzdatenteils des Telegramms übertragen. Damit wird die Fehleraufdeckungswahrscheinlichkeit bei der Telegrammübertragung erhöht, ohne den Nutzdatenteil des jeweiligen Telegramms wesentlich zu reduzieren. Die Unterscheidung der einzelnen Telegramme mittels Bestimmung der Sendezeit wird somit verbessert, da ein Zeitwert mit mehr Stellen - also ein Zeitwert, mit dem eine Zeit, insbesondere eine Sendezeit, genauer darstellbar ist - einsetzbar ist, ohne den Nutzdatenteil der Datenpakete wesentlich einzuschränken.

Gemäß einer vorteilhaften Ausgestaltung der Erfindung ist der zweite Zeitwert in einen niederwertigen Teil und einen höherwertigen Teil (im Folgenden auch High-Teil genannt) aufteilbar und sind im zweiten Kommunikationsmittel Mittel zur Bestimmung der Sendezeit des Telegramms anhand des jeweiligen niederwertigen Teils des ersten bzw. zweiten Zeitwerts und des höherwertigen Teils des zweiten Zeitwerts vorhanden. Damit lässt sich auf besonders einfache Weise auf Empfängerseite, also im zweiten Kommunikationsmittel, die Sendezeit des Telegramms berechnen, ohne dass dazu der komplette erste Zeitwert übertragen werden muss. Mit dieser derart im zweiten Kommunikationsmittel bestimmten Sendezeit und den übertragenen Nutzdaten lässt sich dann auf Empfängerseite der Prüfwert bestimmen und dieser mit dem mitübertragenen Prüfwert des Senders vergleichen. Sind die beiden Prüfwerte unterschiedlich, liegt ein Fehler, insbesondere ein Übertragungsfehler, vor. Sind die beiden Prüfwerte identisch, ist die Nachricht mit hoher Wahrscheinlichkeit korrekt übertragen worden.

Um eine Laufzeitberechnung zu ermöglichen weist gemäß einer weiteren vorteilhaften Ausgestaltung der Erfindung das zweite Kommunikationsmittel Mittel zur Bestimmung einer Laufzeit des Telegramms anhand der Empfangszeit und der im zweiten Kommunikationsmittel bestimmbaren Sendezeit auf. Die Laufzeit kann z. B. als Differenz zwischen Empfangszeit und Sendezeit bestimmt werden.

Zur einfachen Darstellung der Zeiten wird gemäß einer weiteren vorteilhaften Ausgestaltung der Erfindung vorgeschlagen, dass die Zeitwerte als eine Reihe von Zeiteinheiten darstellbar sind, denen Zahlenwerte zuordenbar sind. Besonders vorteilhaft ist die Darstellung, wenn die Zeiteinheiten zumindest Jahr, Monat, Tag, Stunde, Minute, Sekunde und Millisekunde umfassen.

Gemäß einer weiteren vorteilhaften Ausgestaltung der Erfindung enthalten die Zeitwerte die verstrichenen Sekunden ab einem Startzeitpunkt, insbesondere dem 01.01.1984, 00:00 Uhr, und ab der jeweiligen Sekundengrenze verstrichene Sekundenteile, insbesondere Nanosekunden, oder enthalten die Zeitwerte ab dem Startzeitpunkt verstrichene Sekundenbruchteile, insbesondere Millisekunden. Damit lässt sich z. B. in einer 56 Bit breiten Dualzahl ein Zeitraum von 100 Jahren in 10-Mikrosekunden-Schritten darstellen.

Um die Sicherheit bei der Erkennung von Telegrammfehlern zu erhöhen, ist gemäß einer weiteren vorteilhaften Ausgestaltung der Erfindung der Prüfwert durch eine zyklische Redundanzprüfung ermittelbar. Eine solche zyklische Redundanzprüfung ist z. B. der so genannte Cyclic Redundancy Check (CRC). Ein CRC verwendet zur Bestimmung des Prüfwerts statt einfacher Addition eine Polynomdivision und ist im Allgemeinen effektiver bei der Erkennung von Zufallsfehlern als ein auf einer einfachen Prüfsumme basierendes Verfahren.

Gemäß weiteren vorteilhaften Ausgestaltungen der Erfindung sind die Kommunikationsmittel Kommunikationsteilnehmer in einem geschalteten Netzwerk oder in einem Feldbussystem. Die Übertragung von Telegrammen kann weiter verbessert werden, wenn gemäß einer vorteilhaften Ausgestaltung der Erfindung die Telegramme zumindest teilweise in den Kommunikationsmitteln speicherbar sind.

Vorteilhafterweise ist das System zum sicherheitsgerichteten Übertragen von Telegrammen vorgesehen. Sicherheitsgerichtet (engl. failsafe, auch F abgekürzt) bedeutet, dass das System bei Störung oder im Fehlerfall in einen sicheren Zustand übergeht. Bei einem sicherheitsgerichteten System müssen alle im System vorkommenden Fehler (hier Fehler, die in den Kommunikationsmitteln auftreten können) mit einer hinreichend gro-βen Wahrscheinlichkeit erkannt und beherrscht werden, mit dem Ziel die Gefährdung von Mensch, Umwelt und/oder Maschine durch Fehler des Systems ausreichend zu reduzieren.

Gemäß einer weiteren vorteilhaften Ausgestaltung des Systems ist das erste Kommunikationsmittel zum zeitgleichen Übertragen von Telegrammen an mehrere Empfänger vorgesehen. Damit eignet sich das System zum so genannten Multicast-Betrieb.

Nachfolgend wird die Erfindung anhand der in den Figuren dargestellten Ausführungsbeispiele näher beschrieben und erläutert.

Es zeigen:
- FIG 1: ein geschaltetes Kommunikationsnetzwerk mit Kommunikationsmitteln,
- FIG 2: eine schematische Darstellung der verschiedenen Kommunikationsschichten in einem Kommunikationsnetzwerk,
- FIG 3: die Berechnung eines Prüfwerts auf Senderseite,
- FIG 4: einen Teil eines Telegramms,
- FIG 5: die Berechnung eines Prüfwerts auf Empfängerseite,
- FIG 6: die Berechnung eines weiteren Prüfwerts auf Sender-seite,

- FIG 7: einen Teil eines weiteren Telegramms und
- FIG 8: die Berechnung eines weiteren Prüfwerts auf Empfängerseite.

Im Folgenden wird zur Erläuterung des technischen Hintergrunds der Erfindung kurz auf die speziellen Erfordernisse der Kommunikation in sicherheitsgerichteten Systemen eingegangen. Insbesondere in sicherheitsgerichteten Anlagen müssen Fehler aller Art mit hoher Wahrscheinlichkeit erkannt werden und so beherrscht werden, dass sie keine unzulässige Reaktion auslösen. Dies gilt in solchen Anlagen auch für die Kommunikation, z. B. über Feldbusse. Verstärkt werden für solche Feldbuskommunikationen auch Ethernet-Standards und Ethernet-Komponenten benutzt. Solche Komponenten sind beispielsweise als Switches ausgeführte Kommunikationsmittel. In der Feldbuskommunikation können sehr viele (z. B. 100) Switches in Reihe angeordnet sein. Diese Switches haben die Eigenschaft, dass sie sehr viele Telegramme speichern können (1000 oder mehr). Wenn nun in dem Switch ein Fehler auftritt (z. B. kippt durch ein Alphateilchen ein Bit) kann es vorkommen, dass der Switch Telegramme, die er bereits gesendet hat, wiederholt zu senden. Das kann bei sicherheitsgerichteten Anlagen dazu führen, dass ein Aktor, der per Telegrammbefehl bereits abgeschaltet wurde, bedingt durch die noch mal gesendeten "alten Telegramme" wieder eingeschaltet wird (oder auch umgekehrt). Das kann somit zu einem gefährlichen Fehler führen, der in sicherheitsgerichteten Anlagen (Pressensteuerungen, Raffinerien, Seilbahnen, etc.) nicht tolerierbar ist.

Bisherige sicherheitsrelevante Kommunikationsverfahren definieren sich als quittierte Verbindungen. Bei diesen Verfahren wird aus der Differenzzeit vom Senden eines Telegramms bis zum Empfangen der Quittung die Telegrammlaufzeit ermittelt. Zukünftige sicherheitsrelevante Kommunikationsverfahren haben zum Ziel ohne Quittung auszukommen.

Herkömmliche Feldbusse wie PROFIBUS oder Interbus-S nutzten für ihre Kommunikation keine Switches. Die verwendeten Kommunikationsmittel konnten nur wenige Telegramme zwischenspeichern (typischerweise zwei), deshalb genügte es, einen Fehler der bis zu drei alte Telegramme verursacht, zu beherrschen. Diese herkömmlichen sicherheitsgerichteten Kommunikationsverfahren benutzen einen Telegrammzähler mit Zählwerten von maximal acht Bit Breite. Mit Hilfe dieses Telegrammzählers ist es möglich eine Vielzahl von Telegrammfehlern aufzudecken, wie z. B. Telegrammverlust, Telegrammverdopplung, Einfügung eines alten Telegramms, falsche Telegrammfolge.

Neue Feldbusse wie PROFIBUS setzen auf Ethernet auf und benutzen üblicherweise Switches, wodurch zum einen die Wahrscheinlichkeit, dass alte Telegramme wiederholt werden, drastisch erhöht wird und zum anderen auch lange alte Telegrammsequenzen, von z. B. 250 Telegrammen, wiederholt werden können.

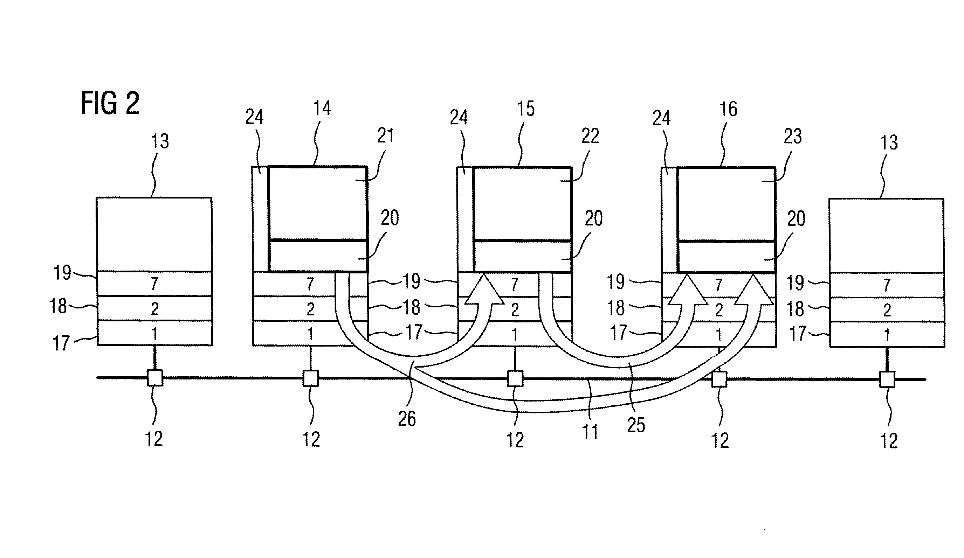

Neue Bussysteme, z. B. PROFINET safety, sollen zusätzlich zur quittierten sicherheitsrelevanten Kommunikation auch unquittierte sicherheitsrelevante Kommunikation unterstützen. Diese benötigt zur Bestimmung der Telegrammlaufzeit nicht die laufende Telegrammnummer sondern die Angabe des Sendezeitpunktes im Telegramm. Ein wesentlicher Vorteil der unquittierten Kommunikation ist, dass sie sich für Multicast eignet, d. h. der Sender schickt ein Telegramm gleichzeitig an mehrere Empfänger. Die mehreren Empfänger sehen auf dem Bus nach, ob sie Empfänger für das jeweilige Multicast-Telegramm sind, wenn ja übernehmen sie es und geben es an den höher gelegenen Layer bis zum Safety-Layer weiter , siehe FIG 2.

Da aber mit Einführung von Switches und den damit möglichen Strukturen auch die Wahrscheinlichkeit von Telegrammverdopplungen stark zunimmt, und die sicherheitsgerichtete Kommunikationsschicht keinen Kredit an den Fehlererkennungsmechanismen der Standard-Kommunikationsschichten nehmen sollte, ist es erforderlich, dass ein solcher Fehler mit sehr hoher Wahrscheinlichkeit aufgedeckt wird. Ein 8-Bit Zeitwert, z. B. in Form einer 8-Bit Uhrzeitangabe oder in Form eines 8-Bit Zählwerts von äquidistanten Zeitabschnitten (Millisekunden oder 10 Mikrosekunden), deckt solche Fehler mit einer Wahrscheinlichkeit wesentlich kleiner als 1:255 auf, was für Sicherheitsanwendungen üblicherweise zu wenig ist. Wenn z. B. die Telegrammrate der sicherheitsrelevanten Telegramme 200 pro Sekunde ist und ein 8 Bit breiter Millisekundenzähler benutzt wird, dann ist die Wahrscheinlichkeit, dass eine Telegrammwiederholung als solche erkannt wird, nur noch ca. 1:50 (= 255/5). Für niedrigere Telegrammraten wird die Fehlererkennung noch schlechter. Für eine sicherheitsgerichtete standardisierbare Kommunikation werden jedoch üblicherweise Restfehlerraten von kleiner als 10⁻⁹ pro Stunde gefordert.

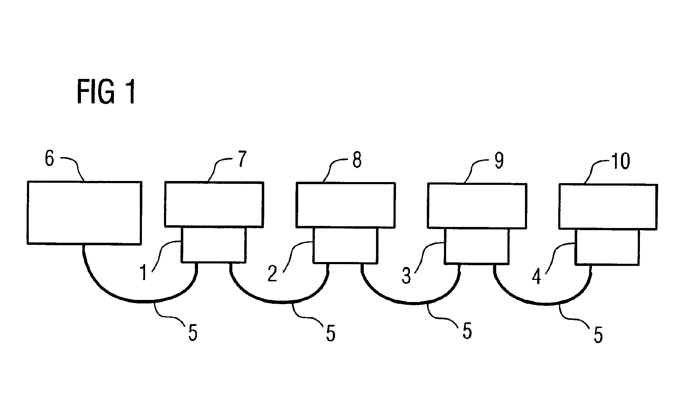

FIG 1 zeigt ein Kommunikationssystem mit Kommunikationsmitteln 1 - 4, welche jeweils zum Senden und/oder Empfangen von Telegrammen vorgesehen sind. Kommunikationsmittel werden auch Kommunikationspartner oder Kommunikationsteilnehmer genannt. Gemäß Ausführungsbeispiel sind die Kommunikationsmittel als Switches ausgeführt. Diese sind über Punkt-zu-Punkt-Verbindungen 5 miteinander und mit einer sicherheitsgerichteten speicherprogrammierbaren Steuerung 6 verbunden. Die speicherprogrammierbare Steuerung 6 weist ebenfalls Kommunikationsmittel auf. Die Kommunikationsmittel 1 - 4 dienen als Kommunikationsschnittstelle zu sicherheitsgerichteten Sensoren 7, 8, 9 bzw. sicherheitsgerichteten Aktoren 10 und können in diese integriert sein.

FIG 2 verdeutlicht die sicherheitsgerichtete Kommunikation mit Hilfe des so genannten Schichtenmodells, in diesem Fall basierend auf dem ISO/OSI-Schichtenmodell. Ein Schichtenmodell beschreibt in Form von logischen abgeschlossenen Schichten, wie die Kommunikation in einem Netzwerk aufgebaut ist. In diesem Fall weist das Kommunikationsmodell für die nicht sicherheitsgerichtete Kommunikation sieben Schichten auf, von denen in FIG 2 drei Schichten exemplarisch dargestellt sind. Diese nicht sicherheitsgerichteten Schichten 17, 18, 19, auch Black Channel genannt, umfassen nicht sicherheitsgerichtete Komponenten wie z. B. ASICs, Links, Kabel, usw. Dargestellt sind die untersten beiden Schichten 17, 18 sowie die oberste Schicht der nicht sicherheitsgerichteten Kommunikation 19. Die unterlagerte nicht sicherheitsgerichtete Kommunikation weist die notwendigen Mittel zum Erreichen der im jeweiligen Anwendungsfall geforderten Verfügbarkeit auf. D. h. die nicht sicherheitsgerichteten Schichten stellen die jeweils geforderte Verfügbarkeit der Kommunikation sicher. In der sicherheitsgerichteten Kommunikationsschicht 20, auch Sicherheitsschicht genannt, welche z. B. redundant aufgebaut ist, wird die erforderliche Sicherheit (z. B. Restfehlerrate < 10⁻⁹ /Stunde) erreicht, d. h. die erforderlichen zusätzlichen Eigenschaften für eine hohe Sicherheit werden hier von der Sicherheitsschicht erfüllt, z. B. Profisafe. Die Sicherheitsschicht stellt sicherheitsgerichtete Funktionen zur Verfügung, z. B. bezüglich Adressierung, Watch Dog Timer, Sequenzierung, Signatur, etc.

Gemäß Ausführungsbeispiel von FIG 2 sind die Kommunikationsmittel als Teil von Standard-Eingabe-/Ausgabebaugruppen 13 sowie einer sicherheitsgerichtete Eingabebaugruppe 14, einer sicherheitsgerichteten Steuerung 15 und einer sicherheitsgerichteten Ausgabebaugruppe 16 ausgeführt. Die Kommunikationsmittel kommunizieren über Punkt-zu-Punkt-Verbindungen 11 und über durch diese verbundene Switches 12. Die unquittierte, sicherheitsgerichtete Kommunikation wird durch die Pfeile 25, 26 symbolisiert. Der Pfeil 26 symbolisiert eine Multicast-Kommunikation, bei welcher die sicherheitsgerichtete Eingabebaugruppe 14 ein Multicast-Telegramm an mehrere Empfänger, im dargestellten Fall an die sicherheitsgerichtete Steuerung 15 und die sicherheitsgerichtete Ausgabebaugruppe 16, sendet. Auf die sicherheitsgerichtete Kommunikationsschicht 20 setzen sicherheitsgerichtete Anwendungen 21 - 23 auf, welche jedoch selbst nicht Teil des Profils der sicherheitsgerichteten Kommunikationsschicht 20 sind. Für die sicherheitsgerichteten Funktionen nicht relevante Funktionen 24 setzen direkt auf die nicht sicherheitsgerichteten Kommunikationsschichten 17 - 19 auf. Solche nicht sicherheitsgerichteten Funktionen betreffen beispielsweise die Diagnose. Die sicherheitsgerichtete Kommunikationsschicht 20 realisiert die im Folgenden erläuterten sicherheitsgerichteten Funktionen wie Prüfwertbestimmung, Zeitüberwachung, Synchronisierung.

Sicherheitsgerichtete Kommunikationsverfahren sichern die in Telegrammen übertragenen Daten üblicherweise durch einen Prüfwert, auch Sicherungsanhang genannt, wie z. B. CRC. Gemäß den im Folgenden dargestellten Ausführungsbeispielen der Erfindung wird der höherwertige Teil des Zeitwerts nicht in den Nutzdaten, auch Nettodaten genannt, übertragen, sondern dem Kommunikationspartner auf andere Weise bekannt gemacht, bzw. dieser Kommunikationspartner wird zeitlich synchronisiert. Zudem wird dieser höherwertige Teil in den Sicherungsanhang, den Prüfwert, eingerechnet. Damit wird die Fehleraufdeckung im Beispiel Profisafe von 2⁸ um den Faktor 2²⁴ erhöht, ohne die Nettodaten in den Telegrammen zu reduzieren. Zur Erkennung von Telegrammverdopplungen wird der gesamte Zeitwert in den Prüfwert einberechnet. Mit diesem Verfahren kann in manchen Fällen zwar nicht unterschieden werden ob ein "CRC-Fehler" vorliegt oder ein Fehler des Zeitwerts, es ist aber bei sicherheitsgerichteten Anwendungen nicht erforderlich dies zu unterscheiden. Wesentlich ist, dass das System erkannt hat, dass ein Fehler vorliegt, damit es die sicherheitsgerichtete Fehlerreaktion einleiten kann.

Die Synchronisation der Zeitwerte, d. h. der Uhrzeit gemäß dem ersten Ausführungsbeispiel bzw. des Zeitzählers gemäß dem zweiten Ausführungsbeispiel, geschieht mit Mechanismen wie sie z. B. in der Norm IEEE 1588 beschrieben sind (IEEE 1588 beschreibt das Precision Time Protokoll (PTP)). Nachdem ein Kommunikationsfehler aufgetreten ist, wartet der Sicherheitslayer bis die Synchronisation der Uhrzeit bzw. des Zeitzählers wieder erfolgt ist. Dies erfährt sie vom Uhrzeitsynchronisationsmechanismus, der in Layer 2-7 implementiert ist. Im Fehlerfall wird vom sicherheitsgerichteten Empfänger das Bit "activate_FV" gesetzt, (FV bedeutet ,,Failsafe-Values", PV bedeutet "Prozess-Values") da sich der Datenempfänger nicht mehr auf die Gültigkeit der Kommunikationsdaten verlassen kann, da ein Switchfehler vorliegen kann, der die Wiederholung von einem oder mehreren alten Telegramme verursacht hat.

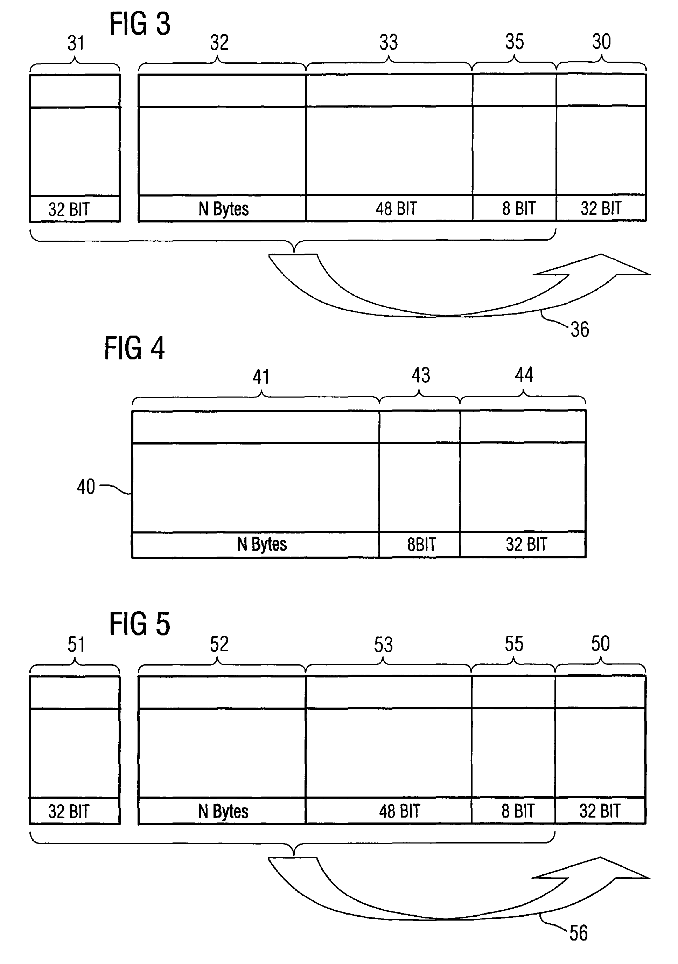

FIG 3 verdeutlicht die Bestimmung eines Prüfwerts auf Senderseite gemäß einem ersten Ausführungsbeispiel der Erfindung. Der zu bestimmende 32 Bit umfassende Prüfwert ist hier mit dem Bezugszeichen 30 gekennzeichnet. Der Vorgang der Bestimmung des Prüfwerts wird durch den Pfeil 36 angedeutet. Der komplette Zeitwert 33, 35 weist 56 Bit Breite auf. Damit wird die Wahrscheinlichkeit, dass im Fehlerfall ein wiederholt gesendetes altes Telegramm nicht als solches erkannt wird, sehr gering. Bei der Bestimmung des Prüfwerts 30 wird ein Initialwert 31 für den Prüfwert berücksichtigt, welcher ebenfalls eine Breite von 32 Bit aufweist. Zudem werden die sicherheitsgerichteten Daten 32 in der erforderlichen Länge (N Bytes) und die 48 höheren Bits des Zeitwerts, mit dem Bezugszeichen 33 gekennzeichnet, sowie der niederwertige Teil (8 Bit) des Zeitwerts, mit dem Bezugszeichen 35 gekennzeichnet, bei der Bestimmung des Prüfwerts 30 berücksichtigt.

Bei der Lösung gemäß dem ersten Ausführungsbeispiel (FIG 3 bis 5) wird der Zeitwert 33, 35 als eine Reihe von Zeiteinheiten dargestellt, denen Zahlenwerte zugeordnet werden. Im dargestellten Fall sind das die Zeiteinheiten Jahr, Monat, Tag, Stunde, Minute, Sekunde und Millisekunde. Im Allgemeinen sind auch zusätzlich die Zeiteinheiten Mikrosekunde (oder z. B. ein Vielfaches von 10 Mikrosekunden) und eine Sommer-Winterzeitangabe üblich. Gemäß dem ersten Ausführungsbeispiel wird als Zeitwert 33, 35 ein vorhandener Uhrzeitwert (von einer z. B. nach IEEE 1588 im Kommunikations-Layer 2-7 synchronisierten Uhr) von 56 Bit (BCD-codiert) genutzt. Dabei enthalten die 48 Bit des High-Teils, d. h. der höherwertige Teil 33, die Zahlenwerte zu den Zeiteinheiten Jahr, Monat, Tag, Stunde, Minute, Sekunde und Millisekunde (100er Stelle), die 8 Bit des Low-Teils, d. h. der niederwertige Teil 35, die Zahlenwerte zu der Zeiteinheit Millisekunde (10er und 1er Stelle). Damit wird die Wahrscheinlichkeit, dass ein altes Telegramm genau den passenden nächsten Zählerstand aufweist, sehr gering (in diesem Beispiel mit 56-Bit-BCD-Wert: (12*30*24*60*60*1000)/ Telegrammrate). Diese zusätzlichen 56 Bit (48 Bit + 8 Bit) reduzieren aber die mögliche Anzahl der Nettodaten. Das Datenpaket ist bei kleinmodularer Peripherie z. B. auf 8 Byte begrenzt.

Durch die Erfindung wird ein Verfahren möglich, in dem die Laufzeitermittlung der einzelnen Telegramme (anhand der Uhrzeitdifferenzen) hinreichend sicher wird, ohne die Datenpakete einzuschränken. Alle sicherheitsrelevanten Kommunikationsverfahren sichern ihre Daten durch einen Sicherungsanhang wie z. B. CRC. Gemäß dem Ausführungsbeispiel der Erfindung werden die höherwertigen Bits der Uhrzeit, d. h. die 48 höheren Bits des Zeitwerts, mit dem Bezugszeichen 33 gekennzeichnet, nicht in den Nettodaten, d. h. den sicherheitsgerichteten Daten 41 (N Bytes), übertragen, sondern empfängerseitig aus der in Kommunikationsschicht 2-7 synchronisierten Uhrzeit entnommen. Diese höherwertigen Bits werden jedoch in den Sicherungsanhang, den Prüfwert 30, eingerechnet. Damit wird die Fehleraufdeckung im Beispiel PROFIsafe um den Faktor (12*30*24*60*60*10) erhöht, ohne die Nettodaten in den Telegrammen zu reduzieren.

In sehr vielen Ethernet-Komponenten (z. B. auch in PROFINET-Komponenten) wird die Uhrzeit mit Zeitsynchronisationsmechanismen wie z. B. in der Norm IEEE 1588 beschrieben, synchron im Sender und Empfänger geführt. Diese Uhrzeit wird nun aufgeteilt in einen Teil, der im Telegramm mitgeführt wird (Low-Teil), und einen Teil der auf Sender- und Empfängerseite synchron geführt wird (High-Teil). Der Teil der im Telegramm mitgeführt wird, weist dabei vorteilhafterweise eine so große Bitbreite auf, dass die Telegrammlaufzeit und der Uhrzeitjitter zusammen noch eine Erkennung der Senderuhrzeit zulassen. Im Beispiel eines BCD-dargestellten 2-stelligen Millisekundenwertes (8 Bit) ist z. B. eine maximale Summe von Telegrammlaufzeit und Uhrzeitjitter von 100 ms zulässig. Maximale Telegrammlaufzeiten sind kleiner als 2 Millisekunden und maximale Uhrzeitjitter sind kleiner als 1 Millisekunde. D. h. für diese Anwendung wäre sogar ein 4 Bit Low-Teil ausreichend.

FIG 4 zeigt den sicherheitsgerichteten Teil des Telegramms, welches zwischen den Kommunikationsmitteln über das Kommunikationsnetzwerk übertragen wird. Dieser sicherheitsgerichtete Teil 40 wird in der sicherheitsgerichteten Kommunikationsschicht, z. B. der Kommunikationsschicht 20 gemäß FIG 2, erzeugt und verarbeitet. Die unterlagerten, nicht sicherheitsgerichteten Kommunikationsschichten fügen diesem sicherheitsgerichteten Teil 40 gegebenenfalls weitere nicht sicherheitsgerichtete Informationen hinzu (Zwiebelprinzip). Der Telegrammteil 40 setzt sich zusammen aus den sicherheitsgerichteten Daten 41 in der erforderlichen Länge (N Bytes), dem niederwertigen Teil (8 Bit) des Zeitwerts, mit dem Bezugszeichen 43 gekennzeichnet, sowie dem sicherheitsgerichteten Prüfwert 44, welcher 32 Bit aufweist.

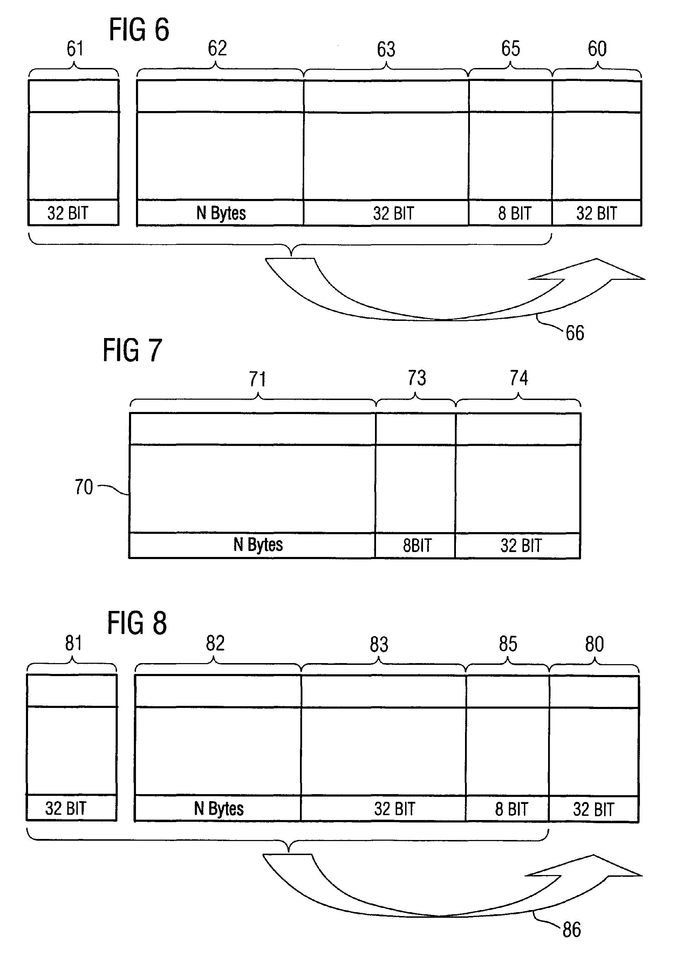

FIG 5 verdeutlicht die Bestimmung eines Prüfwerts auf Empfängerseite gemäß dem ersten Ausführungsbeispiel der Erfindung. Der zu bestimmende 32 Bit umfassende Prüfwert ist hier mit dem Bezugszeichen 50 gekennzeichnet. Der Vorgang der Bestimmung des Prüfwerts wird durch den Pfeil 56 angedeutet. Der komplette Zeitwert 53, 55 weist 56 Bit Breite auf. Der Zeitwert 53, 55 beschreibt dabei nicht die Empfangszeit des Telegramms, sondern die Sendezeit. Bei der Bestimmung des Prüfwerts 50 wird ein Initialwert 51 für den Prüfwert berücksichtigt, welcher ebenfalls eine Breite von 32 Bit aufweist. Zudem werden die sicherheitsgerichteten Daten 52 (N Bytes) und werts, mit dem Bezugszeichen 53 gekennzeichnet, sowie der im Telegramm übertragene niederwertige Teil (8 Bit) des Zeitwerts, mit dem Bezugszeichen 55 gekennzeichnet, bei der Bestimmung des Prüfwerts 50 berücksichtigt.

Diese "Errechnete Uhrzeit High-Teil Sender", d. h. die auf Empfängerseite bestimmten 48 höheren Bits des Zeitwerts, mit dem Bezugszeichen 53 gekennzeichnet, ist nicht identisch mit dem High-Teil der Uhrzeit im Empfänger, sondern stellt die im Empfänger errechnete Sendezeit für die CRC-Berechnung dar. Diese wird wie folgt errechnet:
Wenn "Uhrzeit Low-Teil Sender" > "Uhrzeit Low-Teil Empfänger"
Dann "Errechnete Uhrzeit High-Teil Sender" : = ,,Uhrzeit High-Teil Empfänger" minus 1 Zeitinkrement
Sonst "Errechnete Uhrzeit High-Teil Sender" : = ,,Uhrzeit High-Teil Empfänger".

Wenn die daraus folgende CRC-Berechnung ein OK ergibt, dann kann die Laufzeit des Telegramms wie folgt errechnet werden:
Telegrammlaufzeit= "Gesamtuhrzeit Empfänger" minus "ermittelte Gesamtuhrzeit Sender"

FIG 6 verdeutlicht die Bestimmung eines Prüfwerts auf Senderseite gemäß einem zweiten Ausführungsbeispiel der Erfindung. Der zu bestimmende 32 Bit umfassende Prüfwert ist hier mit dem Bezugszeichen 60 gekennzeichnet. Der Vorgang der Bestimmung des Prüfwerts wird durch den Pfeil 66 angedeutet. Der komplette Zeitwert 63, 65 weist 40 Bit Breite auf. Damit wird die Wahrscheinlichkeit, dass im Fehlerfall ein wiederholt gesendetes altes Telegramm nicht als solches erkannt wird, sehr gering. Bei der Bestimmung des Prüfwerts 60 wird ein Initialwert 61 für den Prüfwert berücksichtigt, welcher ebenfalls eine Breite von 32 Bit aufweist. Zudem werden die sicherheitsgerichteten Daten 62 in der erforderlichen Länge (N Bytes) und die 32 höheren Bits des Zeitwerts, mit dem Bezugszeichen 63 gekennzeichnet, sowie der niederwertige Teil (8 Bit) des Zeitwerts, mit dem Bezugszeichen 65 gekennzeichnet, bei der Bestimmung des Prüfwerts 60 berücksichtigt.

Bei der Lösung gemäß dem zweiten Ausführungsbeispiel (FIG 6 bis 8) wird der Zeitwert 33, 35 als verstrichene Millisekunden ab einem Startzeitpunkt, hier dem 01.01.1984, 00:00 Uhr, dargestellt. Zum einen wird der in diesem Format vorhandene Millisekundenzähler (von einer wie z. B. nach IEEE 1588 im Kommunikations-Layer 2-7 synchronisierten Uhr) von z. B. 40 Bit mitgenutzt. Damit wird die Wahrscheinlichkeit, dass ein altes Telegramm genau den passenden nächsten Zählerstand aufweist sehr gering (in dem Beispiel 40-Bit-Zähler: 2⁴⁰/Telegrammrate). Diese 40 Bit reduzieren aber die mögliche Anzahl der Nettodaten. Das Datenpaket ist bei kleinmodularer Peripherie z. B. auf 8 Byte begrenzt. Durch die Erfindung wird nun ein Verfahren möglich, in dem die Laufzeitermittlung für die einzelnen Telegramme (als Mittel zur Bestimmung einer Sendezeit bzw. einer Empfangszeit des Telegramms dienen gemäß dem zweiten Ausführungsbeispiel Zähler von äquidistanten Zeitabschnitten) sicher wird, ohne die Datenpakete stark einzuschränken. Übliche sicherheitsrelevante Kommunikationsverfahren sichern ihre Daten durch einen Sicherungsanhang, wie z. B. CRC. Gemäß dem Ausführungsbeispiel der Erfindung werden nun zum einen die höherwertigen Bits des Zeitabschnittzählers, d. h. der höherwertige Teil 63 des Zeitwerts 63, 65, nicht in den Nettodaten übertragen, zum anderen werden diese höherwertigen Bits jedoch in den Sicherungsanhang, den Prüfwert 60, eingerechnet. Damit wird die Fehleraufdeckung im Beispiel PROFINET safety um den Faktor 232 erhöht, ohne die Nettodaten in den Telegrammen wesentlich zu reduzieren. Der höherwertige Teil 63 des Zeitwerts 63, 65 enthält die 48 höherwertigen Bits der 56 Bit breiten Dualzahl, d. h. des Zeitwerts 63, 65, welche die Anzahl der ab dem Startzeitpunkt verstrichenen Millisekunden angibt. Der niederwertige Teil 65 verstrichenen Millisekunden angibt. Der niederwertige Teil 65 des Zeitwerts gemäß dem zweiten Ausführungsbeispiel enthält somit 8 niederwertigste Bits des 56 Bit breiten Zeitwerts 63, 65. Der niederwertige Teil 65 des Zeitwerts ist somit das Ergebnis der Rechenoperation "Zeitwert modulo 256". Der Zeitabschnittzähler kann z. B. nach IEEE 1588 synchronisiert werden.

Es muss zur Erkennung von Telegrammverdopplungen immer der gesamte Zähler, d. h. sowohl der höherwertige Teil 63, als auch der niederwertige Teil 65 des Zeitwerts 63, 65, in den CRC einberechnet werden. Mit dieser Methode kann in vielen Fällen zwar nicht unterschieden werden ob ein "CRC-Fehler" vorliegt oder ein Fehler der Zeitabschnittnummer, es ist aber bei sicherheitsrelevanten Anwendungen nicht erforderlich dies zu unterscheiden. Wesentlich ist, dass das System erkannt hat, dass ein Fehler vorliegt, damit es die Fehlerreaktion einleiten kann.

FIG 7 zeigt den sicherheitsgerichteten Teil des Telegramms, welches zwischen den Kommunikationsmitteln über das Kommunikationsnetzwerk übertragen wird. Dieser sicherheitsgerichtete Teil 70 wird in der sicherheitsgerichteten Kommunikationsschicht, z. B. der Kommunikationsschicht 20 gemäß FIG 2, erzeugt und verarbeitet. Die unterlagerten, nicht sicherheitsgerichteten Kommunikationsschichten fügen diesem sicherheitsgerichteten Teil 70 gegebenenfalls weitere nicht sicherheitsgerichtete Informationen hinzu (Zwiebelprinzip). Der Telegrammteil 70 setzt sich zusammen aus den sicherheitsgerichteten Daten 71 in der erforderlichen Länge (N Bytes), dem niederwertigen Teil (8 Bit) des Zeitwerts, mit dem Bezugszeichen 73 gekennzeichnet, sowie dem sicherheitsgerichteten Prüfwert 74, welcher 32 Bit aufweist.

FIG 8 verdeutlicht die Bestimmung eines Prüfwerts auf Empfängerseite gemäß dem zweiten Ausführungsbeispiel der Erfindung. Der zu bestimmende 32 Bit umfassende Prüfwert ist hier mit dem Bezugszeichen 80 gekennzeichnet. Der Vorgang der Bestimkomplette Zeitwert 83, 85 weist 40 Bit Breite auf. Der Zeitwert 83, 85 beschreibt dabei nicht die Empfangszeit des Telegramms, sondern die Sendezeit. Bei der Bestimmung des Prüfwerts 80 wird ein Initialwert 81 für den Prüfwert berücksichtigt, welcher ebenfalls eine Breite von 32 Bit aufweist. Zudem werden die sicherheitsgerichteten Daten 52 (N Bytes) und die auf Empfängerseite bestimmten 32 höheren Bits des Zeitwerts, mit dem Bezugszeichen 83 gekennzeichnet, sowie der im Telegramm übertragene niederwertige Teil (8 Bit) des Zeitwerts, mit dem Bezugszeichen 85 gekennzeichnet, bei der Bestimmung des Prüfwerts 80 berücksichtigt.

Dieser "Ermittelte Zeitzählerwert High-Teil Sender", d. h. die auf Empfängerseite bestimmten 32 höheren Bits des Zeitwerts, mit dem Bezugszeichen 83 gekennzeichnet, ist nicht identisch mit dem High-Teil des Zeitzählerwerts im Empfänger, sondern stellt den im Empfänger errechneten Zeitzählerwert der Sendezeit für die CRC-Berechnung dar. Diese wird wie folgt errechnet:
Wenn "Zeitzählerwert Low-Teil Sender" > "Zeitzählerwert Low-Teil Empfänger"
Dann "Errechneter Zeitzählerwert High-Teil Sender" : = ,,Zeitzählerwert High-Teil Empfänger" minus 1 Zeitinkrement.
Sonst "Errechneter Zeitzählerwert High-Teil Sender" "Zeitzählerwert High-Teil Empfänger".

Wenn die daraus folgende CRC-Berechnung ein OK ergibt, dann kann die Laufzeit des Telegramms wie folgt errechnet werden:
Telegrammlaufzeit = "GesamtZeitzählerwert Empfänger" minus "ermittelte GesamtZeitzählerwert Sender"

Zusammengefasst betrifft die Erfindung somit ein System sowie ein Verfahren zum unquittierten Übertragen von Telegrammen.

Das System weist mindestens ein erstes Kommunikationsmittel 1, welches zum Senden von Telegrammen vorgesehen ist, und mindestens ein zweites Kommunikationsmittel 2 auf, welches zum Empfangen von Telegrammen vorgesehen ist, wobei ein Telegramm einen Prüfwert 30 aufweist, welcher aus einem Nutzdatenteil 32, 33, 35 des Telegramms bestimmbar ist. Um die Erkennung von Fehlern bei der Übertragung von Telegrammen zu verbessern, wird vorgeschlagen, dass das erste Kommunikationsmittel 1 Mittel zur Bestimmung einer Sendezeit des Telegramms in Form eines ersten Zeitwerts 33, 35 aufweist, wobei der erste Zeitwert 33, 35 zur Bestimmung des Prüfwerts 30 Bestandteil des Nutzdatenteils 32, 33, 35 ist, wobei der erste Zeitwert 33, 35 in einen niederwertigen Teil 35 und einen höherwertigen Teil 33 aufteilbar ist, wobei nur der niederwertige Teil 35 des ersten Zeitwerts Bestandteil des Nutzdatenteils bei Übertragung des Telegramms ist, wobei das zweite Kommunikationsmittel 2 Mittel zur Bestimmung der Empfangszeit des Telegramms in Form eines zweiten Zeitwerts 53, 55 aufweist und wobei Mittel zur Synchronisierung der Mittel zur Bestimmung der Sendezeit und der Mittel zur Bestimmung der Empfangszeit vorgesehen sind.

## Patentansprüche

1. System zum Übertragen von Telegrammen, mit mindestens einem ersten Kommunikationsmittel (1), welches zum Senden von Telegrammen vorgesehen ist, mit mindestens einem zweiten Kommunikationsmittel (2), welches zum Empfangen von Telegrammen vorgesehen ist, wobei ein Telegramm einen Prüfwert (30) aufweist, welcher aus einem Nutzdatenteil (32, 33, 35) des Telegramms bestimmbar ist, wobei das erste Kommunikationsmittel (1) Mittel zur Bestimmung einer Sendezeit des Telegramms in Form eines ersten Zeitwerts (33, 35) aufweist, wobei der erste Zeitwert (33, 35) zur Bestimmung des Prüfwerts (30) Bestandteil des Nutzdatenteils (32, 33, 35) ist, wobei der erste Zeitwert (33, 35) in einen niederwertigen Teil (35) und einen höherwertigen Teil (33) aufteilbar ist, wobei nur der niederwertige Teil (35) des ersten Zeitwerts Bestandteil des Nutzdatenteils bei Übertragung des Telegramms ist, wobei das zweite Kommunikationsmittel (2) Mittel zur Bestimmung der Empfangszeit des Telegramms in Form eines zweiten Zeitwerts (53, 55) aufweist und wobei Mittel zur Synchronisierung der Mittel zur Bestimmung der Sendezeit und der Mittel zur Bestimmung der Empfangszeit vorgesehen sind.

2. System nach Anspruch 1,
**dadurch gekennzeichnet,**
**dass** der zweite Zeitwert (53, 55) in einen niederwertigen Teil (55) und einen höherwertigen Teil (53) aufteilbar ist und dass im zweiten Kommunikationsmittel Mittel zur Bestimmung der Sendezeit des Telegramms anhand des jeweiligen niederwertigen Teils (35, 55) des ersten bzw. zweiten Zeitwerts und des höherwertigen Teils (53) des zweiten Zeitwerts vorhanden sind.

3. System nach Anspruch 2,
**dadurch gekennzeichnet ,**
**dass** das zweite Kommunikationsmittel (2) Mittel zur Bestimmung einer Laufzeit des Telegramms anhand der Empfangszeit und der im zweiten Kommunikationsmittel bestimmbaren Sendezeit aufweist.

4. System nach einem der vorhergehenden Ansprüche,
**dadurch gekennzeichnet,**
**dass** die Zeitwerte (33, 35, 53, 55) als eine Reihe von Zeiteinheiten darstellbar sind, denen Zahlenwerte zuordenbar sind.

5. System nach Anspruch 4,
**dadurch gekennzeichnet,**
**dass** die Zeiteinheiten zumindest Jahr, Monat, Tag, Stunde, Minute, Sekunde und Millisekunde umfassen.

6. System nach einem der Ansprüche 1 bis 3,
**dadurch gekennzeichnet,**
**dass** die Zeitwerte (63, 65, 83, 85) die verstrichenen Sekunden ab einem Startzeitpunkt, insbesondere dem 01.01.1984, 00:00 Uhr, und ab der jeweiligen Sekundengrenze verstrichene Sekundenteile, insbesondere Nanosekunden, enthalten oder dass die Zeitwerte ab dem Startzeitpunkt verstrichene Sekundenbruchteile, insbesondere Millisekunden, enthalten.

7. System nach einem der vorhergehenden Ansprüche,
**dadurch gekennzeichnet ,**
**dass** der Prüfwert (30, 50, 60, 80) durch eine zyklische Redundanzprüfung ermittelbar ist.

8. System nach einem der vorhergehenden Ansprüche,
**dadurch gekennzeichnet,**
**dass** die Kommunikationsmittel (1, 2) Kommunikationsteilnehmer in einem geschalteten Netzwerk sind.

9. System nach einem der vorhergehenden Ansprüche,
**dadurch gekennzeichnet ,**
**dass** die Kommunikationsmittel (1, 2) Kommunikationsteilnehmer in einem Feldbussystem sind.

10. System nach einem der vorhergehenden Ansprüche,
**dadurch gekennzeichnet,**
**dass** die Telegramme zumindest teilweise in den Kommunikationsmitteln (1, 2) speicherbar sind.

11. System nach einem der vorhergehenden Ansprüche,
**dadurch gekennzeichnet,**
**dass** das System zum sicherheitsgerichteten Übertragen von Telegrammen vorgesehen ist.

12. System nach einem der vorhergehenden Ansprüche,
**dadurch gekennzeichnet ,**
**dass** das erste Kommunikationsmittel (1) zum zeitgleichen Übertragen von Telegrammen an mehrere Empfänger vorgesehen ist.

13. Verfahren zum Übertragen von Telegrammen zwischen einem ersten und einem zweiten Kommunikationsmittel (1, 2), bei welchem Verfahren aus einem Nutzdatenteil (32, 33, 35) eines Telegramms ein Prüfwert (30) bestimmt wird, wobei im ersten Kommunikationsmittel (1) eine Sendezeit des Telegramms in Form eines ersten Zeitwerts (33, 35) bestimmt wird, wobei der erste Zeitwert (33, 35) bei der Bestimmung des Prüfwerts (30) Bestandteil des Nutzdatenteils (32, 33, 35) ist, wobei der erste Zeitwert (33, 35) in einen niederwertigen Teil (35) und einen höherwertigen Teil (33) aufgeteilt wird, wobei nur der niederwertige Teil (35) des ersten Zeitwerts als Bestandteil des Nutzdatenteils (32, 33, 35) des Telegramms übertragen wird, wobei im zweiten Kommunikationsmittel (2) eine Empfangszeit des Telegramms in Form eines zweiten Zeitwerts (53, 55) bestimmt wird und wobei die Bestimmung der Sendezeit und die Bestimmung der Empfangszeit synchronisiert werden.

14. Verfahren nach Anspruch 13,
**dadurch gekennzeichnet,**
**dass** der zweite Zeitwert (53, 55) in einen niederwertigen Teil (55) und einen höherwertigen Teil (53) aufgeteilt wird und dass im zweiten Kommunikationsmittel die Sendezeit des Telegramms anhand des jeweiligen niederwertigen Teils (35, 55) des ersten bzw. zweiten Zeitwerts und des höherwertigen Teils (53) des zweiten Zeitwerts bestimmt wird.

15. Verfahren nach Anspruch 13 oder 14,
**dadurch gekennzeichnet,**
**dass** im zweiten Kommunikationsmittel (2) eine Laufzeit des Telegramms anhand der Empfangszeit und der im zweiten Kommunikationsmittel bestimmten Sendezeit bestimmt wird.

16. Verfahren nach einem der Ansprüche 13 bis 15,
**dadurch gekennzeichnet ,**
**dass** die Zeitwerte (33, 35, 53, 55) als eine Reihe von Zeiteinheiten dargestellt werden, denen Zahlenwerte zugeordnet werden.

17. Verfahren nach Anspruch 16,
**dadurch gekennzeichnet,**
**dass** die Zeiteinheiten zumindest Jahr, Monat, Tag, Stunde, Minute, Sekunde und Millisekunde umfassen.

18. Verfahren nach einem der Ansprüche 13 bis 15,
**dadurch gekennzeichnet ,**
**dass** die Zeitwerte (63, 65, 83, 85) die verstrichenen Sekunden ab einem Startzeitpunkt, insbesondere dem 01.01.1984, 00:00 Uhr, und ab der jeweiligen Sekundengrenze verstrichene Sekundenteile, insbesondere Nanosekunden, enthalten oder dass die Zeitwerte (63, 65, 83, 85) ab dem Startzeitpunkt verstrichene Sekundenbruchteile, insbesondere Millisekunden, enthalten.

19. Verfahren nach einem der Ansprüche 13 bis 18,
**dadurch gekennzeichnet ,**
**dass** der Prüfwert (30) durch eine zyklische Redundanzprüfung ermittelt wird.

20. Verfahren nach einem der Ansprüche 13 bis 19,
**dadurch gekennzeichnet ,**
**dass** die Kommunikationsmittel (1, 2) Kommunikationsteilnehmer in einem geschalteten Netzwerk sind.

21. Verfahren nach einem der Ansprüche 13 bis 20,
**dadurch gekennzeichnet,**
**dass** die Kommunikationsmittel (1, 2) Kommunikationsteilnehmer in einem Feldbussystem sind.

22. Verfahren nach einem der Ansprüche 13 bis 21,
**dadurch gekennzeichnet,**
**dass** die Telegramme zumindest teilweise in den Kommunikationsmitteln (1, 2) gespeichert werden.

23. Verfahren nach einem der Ansprüche 13 bis 22,
**dadurch gekennzeichnet,**
**dass** die Telegramme sicherheitsgerichtet übertragen werden.

24. Verfahren nach einem der Ansprüche 13 bis 23,
**dadurch gekennzeichnet ,**
**dass** das erste Kommunikationsmittel (1) Telegramme zeitgleich an mehrere Empfänger überträgt.
